# EUROPEAN PATENT SPECIFICATION

(11) **EP 2 707 434 B1**
(45) Date of publication and mention of the grant of the patent: **22.06.2016**
(21) Application number: 12723021.7
(22) Date of filing: 10.05.2012
(51) Int. Cl.: C08L 83/10

(54) **SILICONE POLYETHERIMIDE COPOLYMERS**
SILIKON-POLYETHERIMID-COPOLYMERE
COPOLYMÈRES DE SILICONE-POLYÉTHERIMIDE

(30) Priority: 11.05.2011 US 201113105575
(43) Date of publication of application: 19.03.2014
(73) Proprietor: SABIC Global Technologies B.V., 4612 PX Bergen op Zoom (NL)
(72) Inventor: GALLUCCI, Robert Russell, Mt. Vernon Indiana 47620-9367 (US); BHANDARI, Yashpal J., Mt. Vernon Indiana 47620-9367 (US)
(74) Representative: Office Freylinger
(86) International application number: PCT/US2012/037339
(87) International publication number: WO 2012/154966

(56) References cited:
- WO-A1-2007/149639
- WO-A1-2008/112742
- US-A1- 2005 261 456

## Description

### FIELD OF THE INVENTION

The disclosure relates to polysiloxane/polyimide block copolymers and more specifically to polysiloxane/polyimide block copolymers with improved resistance to hydrolysis.

### BACKGROUND OF INVENTION

Polysiloxane/polyimide block copolymers have been used due to their flame resistance, high temperature stability and electrical insulating capability. Surprisingly it has been found that the silicone polyetherimide copolymer has inferior resistance to hydrolysis than its parent polyetherimide, losing molecular weight and electrical insulating properties when exposed to hot water or steam.

US2005261456 (A1) describes a partial block polyimide-polysiloxane copolymer comprising repeat unit structures having structural formulae (1) and (2) wherein X is an aromatic or aliphatic ring-containing tetravalent organic radical, Y1 is a diamine residue, Y2 is a diaminosiloxane residue, Y1 and Y2 are contained in the copolymer in amounts of 99-20 mol % and 1-80 mol %, respectively, L and m each are an integer of 2-50. The copolymer has good adhesion to substrates, moisture-proof reliability and a low modulus of elasticity.

Formulae (1) and (2) of US2005261456 (A1)

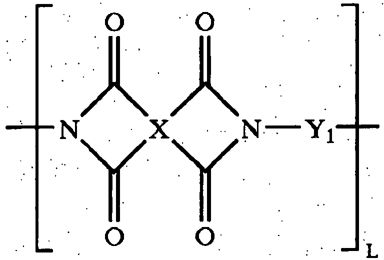

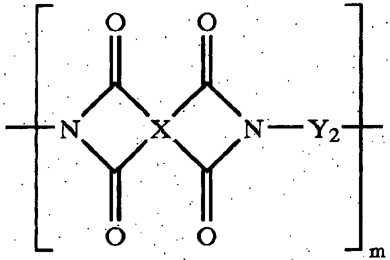

In some applications improved resistance to these effects of water and steam is desirable. Accordingly, a need exists for polysiloxane/polyimide block copolymer compositions having a desired combination of low flammability, high temperature stability, low flexural modulus, high tensile elongation and good electrical properties with improved resistance to steam.

### BRIEF DESCRIPTION OF THE FIGURES

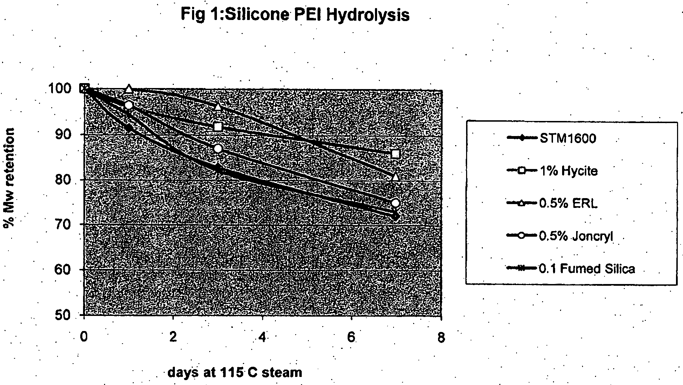

Figure 1 is a plot showing the retention of initial Mw also indicating better performance of the hydrotalcite or polyepoxy silicone polyetherimide blends.

### BRIEF SUMMARY OF THE INVENTION

An embodiment relates to a polysiloxane/polyimide block copolymer composition with improved resistance to steam comprising a polysiloxane/polyimide block copolymer comprising repeating groups of formula (I) and formula (II): 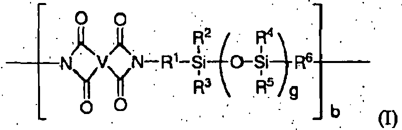 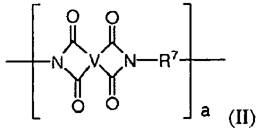 wherein b is from 10 to 1,000, g is from 1 to 50, a is from 10 to 500, and R 1 -6 are independently selected from substituted or unsubstituted, saturated, unsaturated, or aromatic monocyclic or polycyclic groups having 5 to 30 carbon atoms, substituted or unsubstituted alkyl groups having 1 to 30 carbon atoms, substituted or unsubstituted alkenyl groups having 2 to 30 carbon atoms, or combinations thereof, and V is a tetravalent linker selected from substituted or unsubstituted, saturated, unsaturated, or aromatic monocyclic or polycyclic groups having 5 to 50 carbon atoms, substituted or unsubstituted alkyl groups having 1 to 30 carbon atoms, or combinations thereof; R7 in formula (II) includes substituted or unsubstituted divalent organic radicals such as: aromatic hydrocarbon radicals having 6 to 20 carbon atoms and halogenated derivatives thereof; straight or branched chain alkylene radicals having 2 to 20 carbon atoms; cycloalkylene radicals having 3 to 20 carbon atoms; or divalent radicals of the general formula (V) 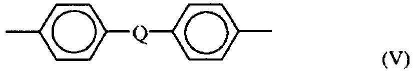 wherein Q includes a divalent moiety comprising -O-, -S-, -C(O)-, -SO₂-, -SO-, -C_{y}H_{2y}- (y being an integer from 1 to 36), and halogenated derivatives thereof, including perfluoroalkylene groups, and from 0.1 to 10 wt% of a combination of a polyfunctional epoxide compound and a hydrotalcite compound, wherein the polyepoxide compound has molecular weight from 200 to 18000 Daltons, and the hydrotalcite compound has a particle size from 1 to 10 micrometers.

The polysiloxane/polyimide copolymer can comprise repeating units of formula (VI) and (VII): 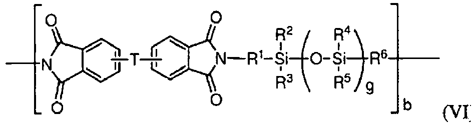 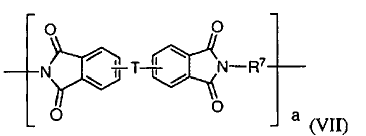 wherein T is -0-, or a group of the Formula -O-Z-O- wherein the divalent bonds of the -0- or the -O-Z-O- group are in the 3,3',3,4',4,3', or the 4,4' positions, and wherein Z is a C6 to C36 aryl group, b is an integer 10 to 1,000; g is an integer of 1 to 50; a is from 10 to 500, and; R 1 -6 are independently selected from substituted or unsubstituted, aromatic monocyclic and polycyclic groups having 5 to 30 carbon atoms, substituted or unsubstituted alkyl groups having 1 to 30 carbon atoms, and substituted or unsubstituted alkenyl groups having 2 to 30 carbon atoms and wherein R7 is derived from m- phenylenediamine, p-phenylenediamine, a sulfonyl dianiline, an oxydianiline, a bis aminophenoxy phenyl sulfone, a methylene dianiline, a bis aminophenoxy benzene or a combination or two or more of the foregoing.

The hydrotalcite compound can be a calcined hydrotalcite. The hydrotalcite can have a magnesium oxide to aluminum oxide mole ratio of about 4.0 to 5.0. The calcined hydrotalcite can have an average particle size of from 1 to 10 micrometers. The calcined hydrotalcite can have less than 30 ppm of elements selected from mercury, lead, cadmium, arsenic, bismuth, or combinations thereof.

The polyepoxide compound can be a cyclohexane oxide functional polyepoxide. The polyepoxide compound can be a glycidyl methacrylate copolymer from a least one monomer selected from C1 to C6 acrylates, C1 to C6 methacrylate, styrene, methyl styrene, or butadiene. The polyepoxide compound and hydrotalcite compound are used in combination having from 1 to 99% polyepoxide compound and 99 to 1% hydrotalcite compound.

The block copolymer can have a residual solvent content less than or equal to 500 parts by weight of solvent per million parts by weight of block copolymer. The block copolymer can have less than 100 parts by weight of halogen selected from bromine, chlorine or a combination thereof, per million parts by weight of block copolymer. The siloxane content can be 10 to 40 weight percent based on the total weight of the block copolymer.

The amount of water extractable metal ions can be less than or equal to 1000 parts by weight of metal ions per million parts by weight of polysiloxane/polyimide block copolymer.

The polysiloxane/polyimide block copolymer can have a weight average molecular weight of 15,000 to 80,000 Daltons.

Another embodiment relates to a coated wire comprising a conductor and an insulating layer comprising a polysiloxane/polyimide block copolymer as described above.

Another embodiment relates to an article comprising the polysiloxane/polyimide block copolymer, wherein the article retains at least 83% of its molecular weight (Mw) when exposed to steam in an autoclave at temperature of from 110 to 120 degrees Celsius for at least 3 days.

### DESCRIPTION OF THE INVENTION

The aforementioned needs for a silicone polyetherimide with improved molecular weight retention, and concomitant retention of mechanical properties, when exposed to steam are addressed by a blend of polysiloxane/polyimide block copolymer with a polyepoxide compound and a hydrotalcite compound as disclosed in claim 1.

The present invention may be understood more readily by reference to the following detailed description of preferred embodiments of the invention as well as to the examples included therein. All percentages are weight percentages, unless otherwise indicated.

The polysiloxane/polyimide block copolymer comprises repeating groups of formula (I) and formula (II): 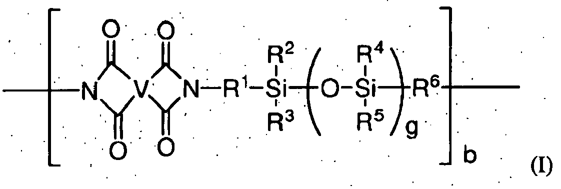 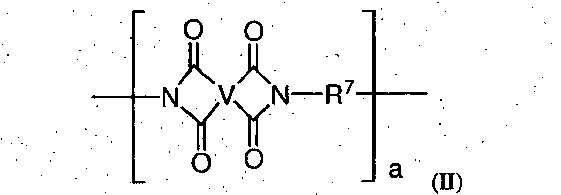 wherein "b" is greater than 1, or, more specifically, 10 to 1,000; g is 1 to 50; a is greater than 1, more specifically 10 to 1,000, or still more specifically a can be 10 to 500; R¹⁻⁶ are independently at each occurrence selected from substituted or unsubstituted, saturated, unsaturated, or aromatic monocyclic or polycyclic groups having 5 to 30 carbon atoms, substituted or unsubstituted alkyl groups having 1 to 30 carbon atoms, substituted or unsubstituted alkenyl groups having 2 to 30 carbon atoms, or combinations thereof; and V is a tetravalent linker selected from substituted or unsubstituted, saturated, unsaturated, or aromatic monocyclic or polycyclic groups having 5 to 50 carbon atoms, substituted or unsubstituted alkyl groups having 1 to 30 carbon atoms, or combinations thereof. Suitable substitutions include, but are not limited to, alkyl, alkenyl, or alkynyl groups having 1 to 10 carbon atoms, aryl groups having 6 to 12 carbon atoms, and ethers, amides, esters containing , alkyl, alkenyl, or alkynyl groups having 1 to 10 carbon atoms, aryl groups having 6 to 12 carbon atoms, and combinations comprising at least one of the foregoing. Exemplary linkers include, but are not limited to, tetravalent aromatic radicals of formula (III), such as: 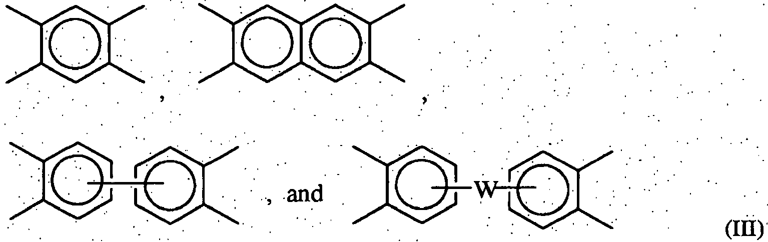 wherein W is a divalent moiety such as -O-, -S-, -C(O)-, -SO₂-, -SO-, -C_{y}H_{2y}- (y being an integer of 1 to 12), and halogenated derivatives thereof, including perfluoroalkylene groups, or a group of the formula -O-Z-O- wherein the divalent bonds of the -O-, -S-, -C(O)-, -SO₂-, - SO-, -C_{y}H_{2y} or the -O-Z-O- group are in the 3,3', 3,4', 4,3', or the 4,4' positions, and wherein Z includes, but is not limited to, divalent radicals of formula (IV): 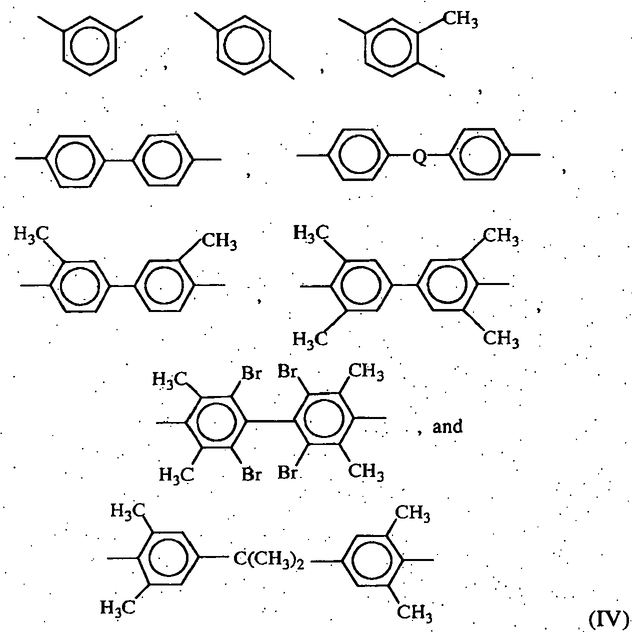 wherein Q includes, but is not limited to, a divalent moiety comprising -O-, -S-, -C(O)-,-SO₂-, -SO-, -C_{y}H_{2y}- (y being an integer from 1 to 36), and halogenated derivatives thereof, including perfluoroalkylene groups.

R⁷ in formula (II) includes but is not limited to substituted or unsubstituted divalent organic radicals such as: aromatic hydrocarbon radicals having 6 to 20 carbon atoms and halogenated derivatives thereof; straight or branched chain alkylene radicals having 2 to 20 carbon atoms; cycloalkylene radicals having 3 to 20 carbon atoms; or divalent radicals of the general formula (V) 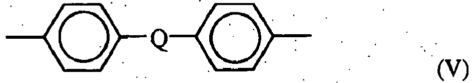 wherein Q is defined as above.

In some embodiments the polysiloxane/polyimide block copolymer is a polysiloxane/polyetherimide block copolymer comprising repeating groups of formula (VI) and (VII): 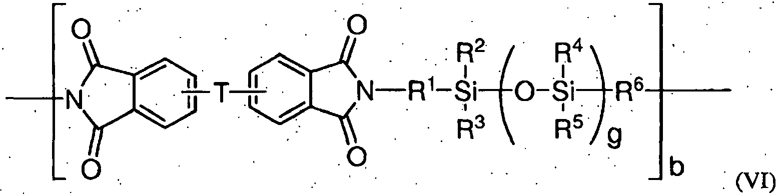 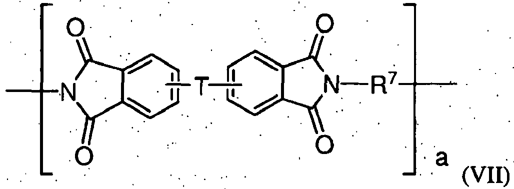 wherein T is -O-, -S-, -SO₂- or a group of the Formula -O-Z-O- wherein the divalent bonds of the -O-, -S-, -SO₂- or the -O-Z-O- group are in the 3,3', 3,4', 4,3', or the 4,4' positions, and wherein Z, R¹⁻⁷, g, a, and b are defined as described above. In some instances R⁷ is derived from m- phenylenediamine, p-phenylenediamine, a sulfonyl dianiline, an oxydianiline, a bis aminophenoxy phenyl sulfone, a methylene dianiline, a bis aminophenoxy benzene or a combination or two or more of the foregoing.

The polysiloxane/polyimide block copolymer can be prepared by various methods, including the reaction of a dianhydride with a diamino siloxane and a non-siloxane diamine.

Dianhydrides useful for forming the block copolymer have formula (VIII) 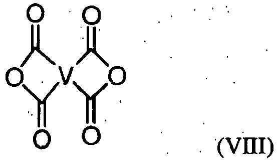 wherein V is a tetravalent linker as described above. In some embodiments the tetravalent linker V is free of halogens. Exemplary dianhydrides include biphenyl dianhydrides, pyromellitic dianhydrides, oxydiphthalic anhydrides, biphenol dianhydrides, benzophenone tetra carboxylic dianhydrides and combinations of two or more of the foregoing.

In an embodiment, the dianhydride comprises an aromatic bis(ether anhydride). Examples of specific aromatic bis(ether anhydride)s are disclosed, for example, in U.S. Patent Nos. 3,972,902 and 4,455,410. Illustrative examples of aromatic bis(ether anhydride)s include: 2,2-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride and 4-(2,3-dicarboxyphenoxy)-4'-(3,4-dicarboxyphenoxy)diphenyl sulfone dianhydride, oxydiphthalic dianhydride as well as combinations comprising two or more of the foregoing.

A chemical equivalent to a dianhydride may also be used. Examples of dianhydride chemical equivalents include tetra-functional carboxylic acids capable of forming a dianhydride and ester or partial ester derivatives of the tetra functional carboxylic acids. Mixed anhydride acids or anhydride esters may also be used as an equivalent to the dianhydride. As used throughout the specification and claims "dianhydride" will refer to dianhydrides and their chemical equivalents.

Diamino siloxanes are of formula (IX) 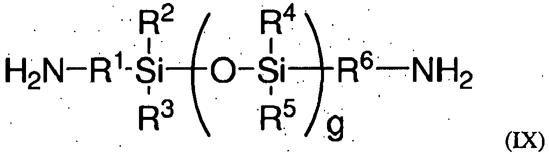 wherein R¹⁻⁶ and g are defined as above. In an embodiment R²⁻⁵ are methyl groups and R¹ and R⁶ are alkylene groups. The synthesis of diamino siloxanes is known in the art and is taught, for example, in U.S. Patent Nos. 4,808,686, 5,026,890, 6,339,1376 and 6,353,073. In an embodiment R¹ and R⁶ are alkylene groups having 3 to 10 carbons. In some embodiments R¹ and R⁶ are the same and in some embodiments R¹ and R⁶ are different.

Non-siloxane have the Formula (X)

**H₂N-R⁷-NH₂** _{(X)}

wherein R⁷ is as defined above. Examples of specific organic diamines are disclosed, for example, in U.S. Patent Nos. 3,972,902 and 4,455,410. Exemplary diamines include ethylenediamine, propylenediamine, trimethylenediamine, diethylenetriamine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2,2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3, 5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1,3-diamino-4-isopropylbenzene, bis(4-aminophenyl) sulfide, and bis (4-aminophenyl) sulfone, bis(4-aminophenyl) ether. Combinations of these compounds may also be used. In an embodiment the diamine is an aromatic diamine. In an embodiment the diamine is m- phenylenediamine, p-phenylenediamine, a sulfonyl dianiline, an oxydianiline, a bis aminophenoxy phenyl sulfone, a methylene dianiline, a bis aminophenoxy benzene or a combination or two or more of the foregoing.

The diaminosiloxane and non-siloxane diamine may be physically mixed prior to reaction with the dianhydride, thus forming a substantially random block copolymer. Alternatively, a non-random block copolymer may be formed by forming prepolymers or sequential addition of reactants.

In general, the reactions can be carried out employing various solvents, e.g., o-dichlorobenzene, chlorobenzene, m-cresol, toluene, anisole, veratrole and the like, to effect a reaction between the dianhydride of Formula (XII) and the diamine of Formula (XIII), at temperatures of 100°C to 250°C. Alternatively, the polyimide block or polyetherimide block can be prepared by melt polymerization or interfacial polymerization, e.g., melt polymerization of an aromatic bis(ether anhydride) and a diamine by heating a combination of the starting materials to elevated temperatures with concurrent stirring. Generally, melt polymerizations employ temperatures of 200°C to 400°C.

A chain-terminating agent may be employed to control the molecular weight of the polysiloxane/polyimide block copolymer. Mono-functional amines such as aniline, or mono-functional anhydrides such as phthalic anhydride may be employed. Branching agents, such as trifunctional amines or trifunctional dianhydrides may also be employed in the reaction.

Polysiloxane/polyimide block copolymers comprise polysiloxane blocks and polyimide blocks. In random polysiloxane/polyimide block copolymers the size of the siloxane block is determined by the number of siloxy units (analogous to g in formula (I)) in the monomer used to form the block copolymer. In some non-random polysiloxane/polyimide block copolymers the order of the polyimide blocks and polysiloxane blocks is determined but the size of the siloxane block is still determined by the number of siloxy units in the monomer. In contrast, the polysiloxane/polyimide block copolymers described herein have extended siloxane blocks. Two or more siloxane monomers are linked together to form an extended siloxane oligomer which is then used to form the block copolymer.

In some embodiments the polysiloxane/polyimide block copolymer comprises extended block repeating units of formula (XI) 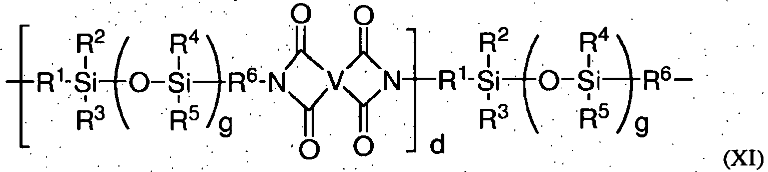 wherein R¹⁻⁶, V, and g are defined as above and d is greater than or equal to 1.

Polysiloxane/polyimide block copolymers having extended siloxane blocks are made by forming an extended siloxane oligomer and then using the extended siloxane oligomer to make the block copolymer. The extended siloxane oligomer is made by reacting a diamino siloxane and a dianhydride wherein either the diamino siloxane or the dianhydride is present in 10 to 50% molar excess, or, more specifically, 10 to 25% molar excess. "Molar excess" as used in this context is defined as being in excess of the other reactant. For example, if the diamino siloxane is present in 10% molar excess then for 100 moles of dianhydride are present there are 110 moles of diamino siloxane.

The diamino siloxane and dianhydride can be reacted in a suitable solvent, such as a halogenated aromatic solvent, for example ortho dichlorobenzene, optionally in the presence of a polymerization catalyst such as an alkali metal aryl phosphinate or alkali metal aryl phosphonate, for example, sodium phenylphosphonate. In some instances the solvent will be an aprotic polar solvent with a molecular weight less than or equal to 500 Dalton to facilitate removal of the solvent from the polymer. The temperature of the reaction can be greater than or equal to 100°C and the reaction may run under azeotropic conditions to remove the water formed by the reaction. In some embodiments the polysiloxane/polyimide block copolymer has a residual solvent content less than or equal to 500 parts by weight of solvent per million parts by weight of polymer (ppm), or, more specifically, less than or equal to 250 ppm, or, even more specifically, less than or equal to 100 ppm. Residual solvent content may be determined by a number of methods including, for example, gas chromatography. In some instances the solvent is selected from chlorobenzene, dichlorobenzenes, trichlorobenzenes, toluene, xylenes, alkylbenzenes, mesitylene, phenol, cresols, xylenols, mesitols, anisole, veratrole, diphenyl sulfone, or combinations thereof.

The stoichiometric ratio of the diamino siloxane and dianhydride in the reaction to form the siloxane oligomer determines the degree of chain extension, (d in Formula (XI) is greater than 1) in the extended siloxane oligomer. For example, a stoichiometric ratio of 4 diamino siloxane to 6 dianhydride will yield a siloxane oligomer with a value for d+1 of 4. As understood by one of ordinary skill in the art, d+1 is an average value for the siloxane containing portion of the block copolymer and the value for d+1 is generally rounded to the nearest whole number. For example a value for d+1 of 4 includes values of 3.5 to 4.5. In some embodiments d is less than or equal to 50, or, more specifically, less than or equal to 25, or, even more specifically, less than or equal to 10.

The extended siloxane oligomers described above are further reacted with non-siloxane diamines and additional dianhydrides to make the polysiloxane/polyimide block copolymer. The overall molar ratio of the total amount of dianhydride and diamine (the total of both the siloxane and non-siloxane containing diamines) used to make the polysiloxane/polyimide block copolymer should be about equal so that the copolymer can polymerize to a high molecule weight. In some embodiments the ratio of total diamine to total dianhydride is 0.9 to 1.1, or, more specifically 0.95 to 1.05.

The polysiloxane/polyimide block copolymer can be made by first forming the extended siloxane oligomer and then further reacting the extended siloxane oligomer with non-siloxane diamine and dianhydride. Alternatively a non-siloxane diamine and dianhydride can be reacted to form a polyimide oligomer. The polyimide oligomer and extended siloxane oligomer can be reacted to form the polysiloxane/ polyimide block copolymer.

When using a polyimide oligomer and an extended siloxane oligomer to form the block copolymer, the stoichiometric ratio of terminal anhydride functionalities to terminal amine functionalities is 0.90 to 1.10, or, more specifically, 0.95 to 1.05. In an embodiment the extended siloxane oligomer is amine terminated and the non-siloxane polyimide oligomer is anhydride terminated. In another embodiment, the extended siloxane oligomer is anhydride terminated and the non-siloxane polyimide oligomer is amine terminated. In another embodiment, the extended siloxane oligomer and the non-siloxane polyimide oligomer are both amine terminated and they are both reacted with a sufficient amount of dianhydride (as described above) to provide a copolymer of the desired molecular weight. In another embodiment, the extended siloxane oligomer and the non-siloxane polyimide oligomer are both anhydride terminated and they are both reacted with a sufficient amount of diamine (as described above) to provide a copolymer of the desired molecular weight. Reactions conditions for the polymerization of the siloxane and polyimide oligomers are similar to those required for the formation of the oligomers themselves and can be determined without undue experimentation by one of ordinary skill in the art.

The polysiloxane/polyimide block copolymer has a siloxane content of 5 to 50 weight percent, or, more specifically, 5 to 30 weight percent, based on the total weight of the block copolymer. In some embodiments the polysiloxane block of the copolymer has a weight average molecular weight (Mw) of 300 to 3000 Dalton. In some other embodiments the polysiloxane/polyimide block copolymer will have a weight average molecular weight (Mw) of 15,000 to 80,000 Daltons, or, more specifically, 20,000 to 50,000 Daltons.

In some embodiments the silicone polyimides can be silicone polyetherimides which contain aryl ether linkages that can be derived by polymerization of dianhydrides and/or diamines wherein at least a portion of the dianhydride or the diamine contains an aryl ether linkage. In some instances both the diamine and dianhydride will contain an aryl ether linkage and at least a portion of the diamine or dianhydride will contain siloxane functionality, for example as described above. In other embodiments the aryl ether linkage can de derived from dianhydrides such as bisphenol A diphthalic anhydride, biphenol diphthalic anhydride, oxy diphthalic anhydride or combinations thereof. In still other siloxane polyetherimides the aryl ether linkages can be derived from at least one diamine containing aryl ether linkages, for example, diamino diphenyl ethers, bis amino phenoxy benzenes, bis amino phenoxy phenyl sulfones or combinations thereof. Either the diamine or dianhydride can have aryl ether linkages or in some instances both monomers can contain aryl ether linkages.

In some other embodiments the silicone polyimide will be a silicone polyetherimide sulfone and can contain aryl sulfone linkages and aryl ether linkages. Sulfone linkages can be introduced into the polymer by polymerization of dianhydrides and/or diamines wherein at least a portion of the dianhydride or the diamine contains an aryl sulfone linkage. In some instances both the diamine and dianhydride will contain an aryl ether linkage or an aryl sulfone linkage and at least a portion of the diamine or dianhydride will contain siloxane functionality, for example as described above. In other embodiments the aryl ether linkage can de derived from dianhydrides such as sulfone diphthalic anhydride, diphenyl sulfone diphthalic anhydride or combinations thereof. In still other siloxane polyetherimide sulfones the aryl ether linkages can be derived from at least one diamine containing a aryl sulfone linkages, for example, diamino diphenyl sulfones (DDS), bis amino phenoxy phenyl sulfones (BAPS) or combinations thereof. Either the diamine or dianhydride can have an aryl sulfone linkage or in some instances both monomers can also contain aryl sulfone linkages.

The thermoplastic composition can comprise a blend of two or more polysiloxane/polyimide block copolymers. The block copolymers can be used in any proportion. For example, when two block copolymers are used the weight ratio of the first block copolymer to the second block copolymer can be 1 to 99. Ternary blends and higher are also contemplated.

In some embodiments, especially in demanding electronic applications, such as the fabrication of computer chips and the manipulation of silicone wafers, it is desirable to have polysiloxane/polyimide block copolymer or blend of polysiloxane/polyimide block copolymers with low metal ion content. In some embodiments the amount of metal ions is less than or equal to 1000 parts per million parts of copolymer (ppm), or, more specifically, less than or equal to 500 ppm or, even more specifically, the metal ion content will be less than or equal to 100 ppm. Alkali and alkaline earth metal ions are of particular concern. In some embodiments the amount of alkali and alkaline earth metal ions is less than or equal to 1000 ppm in the hydrolysis resistant polysiloxane/polyimide block copolymer and wires or cables made from them.

The thermoplastic composition can have a residual solvent content less than or equal to 500 parts by weight of solvent per million parts by weight of composition (ppm), or, more specifically, less than or equal to 250 ppm, or, even more specifically, less than or equal to 100 ppm. In some instances the solvent will be selected from chlorobenzene, dichlorobenzenes, trichlorobenzenes, toluene, xylenes, alkylbenzenes, mesitylene, phenol, cresols, xylenols, mesitols, anisole, veratrole, diphenyl sulfone, or combinations thereof.

In some embodiments the thermoplastic composition is halogen free. Halogen free is defined as having a halogen content less than or equal to 1000 parts by weight of halogen per million parts by weight of thermoplastic composition (ppm). The amount of halogen can be determined by ordinary chemical analysis such as atomic absorption. Exemplary halogens are chlorine and bromine. Halogen free thermoplastic compositions will further have combustion products with low smoke corrosivity, for example as determined by DIN 57472 part 813. In some embodiments smoke conductivity, as judged by the change in water conductivity can be less than or equal to 1000 micro Siemens. In some embodiments the smoke has an acidity, as determined by pH, greater than or equal to 5.

In some embodiments the amount of metal ions in the thermoplastic composition is less than or equal to 1000 parts by weight of metal ions per million parts by weight of thermoplastic composition (ppm), or, more specifically, less than or equal to 500 ppm or, even more specifically, the metal ion content is less than or equal to 100 ppm. Alkali and alkaline earth metal ions are of particular concern. In some embodiments the amount of alkali and alkaline earth metal ions is less than or equal to 1000 ppm in the thermoplastic composition and wires or cables made from them.

The multifunctional epoxy compound for improving the hydrolytic stability of the thermoplastic compositions can be either polymeric or non-polymeric. As used herein, the term "multifunctional" means that at least two epoxy groups are present in each molecule of the epoxy compound. Other functional groups can also be present, provided that such groups do not substantially adversely affect the desired properties of the thermoplastic composition.

The multifunctional epoxy compound can contain aromatic and/or aliphatic residues, as well as non-epoxy functional groups. In an embodiment, the multifunctional epoxy compound is a polymeric compound comprising at least two epoxy groups, wherein the polymeric compound has an Mw of 1,000 to 18,000 Daltons. Exemplary polymers (which as used herein includes oligomers) having multiple epoxy groups include the reaction products of an epoxy-containing ethylenically unsaturated monomer (e.g., a glycidyl (C₁₋₄ alkyl) (meth)acrylate, allyl glycidyl ethacrylate, and glycidyl itoconate) with one or more non-epoxy functional ethylenically unsaturated compounds (e.g., styrene, ethylene, methyl (meth)acrylate, n-butyl acrylate). As used herein, the term "(meth)acrylic acid" includes both acrylic and methacrylic acid monomers, and the term "(meth)acrylate" includes both acrylate and methacrylate monomers. Specifically, the multifunctional epoxy polymer can be the reaction product of an epoxy-functional (meth)acrylate monomer with a non-epoxy functional styrenic and/or (C₁₋₈ hydrocarbyl) (meth)acrylate and/or olefin monomer.

In an embodiment the multifunctional epoxy polymer is a copolymeric reaction product of a glycidyl (meth)acrylate monomer, ethylene, and optionally a C₁₋₄ (alkyl) (meth)acrylate monomer. Useful commercially available terpolymers of this type include the ethylene-methyl acrylate-glycidyl methacrylate terpolymers sold under the trade name LOTADER by Atofina.

In another embodiment the multifunctional epoxy polymer is the reaction product of an epoxy-functional (meth)acrylate monomer, a non-epoxy functional styrenic monomer, and optionally a non-epoxy functional C₁₋₄ (hydrocarbyl) (meth)acrylate monomer.

Examples of specific epoxy-functional (meth)acrylate monomers include those containing 1,2-epoxy groups such as glycidyl acrylate and glycidyl methacrylate. Exemplary styrenic monomers include styrene, alpha-methyl styrene, vinyl toluene, p-methyl styrene, t-butyl styrene, o-chlorostyrene, and combinations comprising at least one of the foregoing. In certain embodiments the styrenic monomer is styrene and/or alpha-methyl styrene. Exemplary C₁₋₈(hydrocarbyl) (meth)acrylate monomers include methyl acrylate, ethyl acrylate, n-propyl acrylate, i-propyl acrylate, n-butyl acrylate, s-butyl acrylate, i-butyl acrylate, t-butyl acrylate, n-amyl acrylate, i-amyl acrylate, isobornyl acrylate, n-hexyl acrylate, 2-ethylbutyl acrylate, 2-ethylhexyl acrylate, n-octyl acrylate, n-decyl acrylate, methylcyclohexyl acrylate, cyclopentyl acrylate, cyclohexyl acrylate, methyl methacrylate, ethyl methacrylate, n-propyl methacrylate, n-butyl methacrylate, i-propyl methacrylate, i-butyl methacrylate, n-amyl methacrylate, n-hexyl methacrylate, i-amyl methacrylate, s-butylmethacrylate, t-butyl methacrylate, 2-ethylbutyl methacrylate, methylcyclohexyl methacrylate, cinnamyl methacrylate, crotyl methacrylate, cyclohexyl methacrylate, cyclopentyl methacrylate, 2-ethoxyethyl methacrylate, and isobornyl methacrylate. Specific optional commoners are C₁₋₄(alkyl) (meth)acrylate monomers. Combinations comprising at least one of the foregoing comonomers can be used.

Several useful examples of styrene-(meth)acrylate copolymers containing glycidyl groups incorporated as side chains are described in the International Patent Application WO 03/066704 A1. A high number of epoxy groups per mole is useful, for example, 10 to 500, more specifically 100 to 400, or even more specifically 250 to 350. These polymeric materials have a weight average molecular weight of 1500 to 18,000 Daltons, specifically 3,000 to 13,000 Daltons, or even more specifically 4,000 to 8,500 Daltons. Epoxy-functional styrene-(meth)acrylate copolymers with glycidyl groups are commercially available from BASF Co. under the JONCRYL trade name, for example the JONCRYL ADR 4368 material.

In another embodiment, the multifunctional epoxy compound is a monomeric or polymeric compound having two terminal epoxy functionalities, and optionally other functionalities. The compound can further contain only carbon, hydrogen, and oxygen. Difunctional epoxy compounds, in particular those containing only carbon, hydrogen, and oxygen can have a molecular weight of below 1000 Daltons but above 200 Daltons. In an embodiment the difunctional epoxy compounds have at least one of the epoxide groups on a cyclohexane ring, for example a cyclohexene oxide functionality. Exemplary difunctional epoxy compounds include, but are not limited to, 3,4-epoxycyclohexyl-3,4-epoxycyclohexyl carboxylate, bis(3,4-epoxycyclohexylmethyl) adipate, and vinylcyclohexene di-epoxide, bisphenol diglycidyl ethers such as bisphenol A diglycidyl ether (available from Dow Chemical Company under the trade names DER 332, DER 661, and DER 667, or from Hexion under the trade names EPON 826, EPON 828, EPON 1001F, EPON 1004F, EPON 1005F, EPON 1007F, and EPON 1009F), tetrabromobisphenol A diglycidyl ether, glycidol, diglycidyl adducts of amines and amides, diglycidyl adducts of carboxylic acids such as the diglycidyl ester of phthalic acid and the diglycidyl ester of hexahydrophthalic acid (available from Ciba Products under the trade name Araldite CY 182), bis(3,4-epoxy-6-methylcyclohexylmethyl) adipate, butadiene diepoxide, vinylcyclohexene diepoxide, dicyclopentadiene diepoxide, cycloaliphatic epoxy resins commercially available from Dow under the trade names, ERL-4221 and ERL-4299. Especially useful are cyclohexane oxides such as 3,4-epoxycyclohexyl-3,4 epoxycyclohexylcarboxylate, commercially available from Dow-Union Carbide Corporation.

The epoxy compound is added to the thermoplastic composition in an amount effective to aid in the retention of molecular weight of the composition after hydrothermal aging. In an embodiment, the epoxy compound is added to the thermoplastic composition in an amount effective to retain the weight average molecular weight (Mw) of the composition after hydrothermal treatment. A person skilled in the art can determine the optimum type and amount of any given epoxy compound without undue experimentation, using the guidelines provided herein. The type and amount of the epoxy compound will depend on the desired characteristics of the composition, the type of polycarbonate-containing copolymer used, the type and amount of other additives present in the composition and like considerations. For example, the amount of the epoxy compound is 0.01 to 10 wt.%, more specifically, 0.01 to 5 wt.%, or even more specifically, 0.1 to 3 wt.%, based on the total weight of the polymer component of the thermoplastic composition.

The present invention is directed to the preparation of polyetherimide silicone copolymers with improved hydrolytic stability. Hydrolytic stability is improved by use of a selected amount of a calcined hydrotalcite and a polyepoxide compound.

Hydrotalcite is a synthetic or naturally occurring alumino magnesium carbonate. Synthetic hydrotalcite is preferred for its consistency and low color. The effective amount of hydrotalcite needed to improve hydrolytic stability will depend on the specific polyetherimide siloxane and the exact conditions of exposure to water. Generally the amount of calcined hydrotalcite will be from 0.005 to 5.0 wt% based on the whole formulation, in most instances levels of from 0.01 to 0.5% will give improved hydrolysis resistance. In some instances the hydrotalcite can be calcined from 400 to 1000 °C. In another instance the calcined hydrotalcite can have a magnesium oxide to aluminum oxide mole ratio of 4.0 to 5.0. Calcined hydrotalcite with an average particle size of less than or equal to 10 micrometers can be used in some cases to improve impact strength and elongation at break. In other instances, for example when food contact is desired, the calcined hydrotalcite can have less than 30 ppm of elements selected from mercury, lead, cadmium, arsenic, bismuth, or combinations thereof. Hydrotalcite compounds are described in the US patents 3,879,523: 4,165,339; 4,351,814; 4,904,457; 5,399,329; 5,507,980; 6,156,696 and references cited therein. Hydrotalcite is available from Ciba Co. (now a part of BASF Co.) under the trade name HYCITE 713, and also from Kyowa Chemical Industry Co. under the trade name DHT-4A, DHT-4A-2, or ALCAMIZER.

A wide variety of additives can be used in the thermoplastic compositions, with the proviso that the additive(s) and amount(s) are selected such that their inclusion does not significantly adversely affect the desired properties of the thermoplastic composition, for example, hydrolytic stability, or mechanical properties such as for example the impact properties. Such additives can be included during the mixing of the components to form the thermoplastic composition. Thus, in an embodiment, the thermoplastic composition can further comprise an additive including an impact modifier, a filler, an antioxidant, a heat stabilizer, a light stabilizer, an ultraviolet light absorber, a plasticizer, a lubricant, a mold release agent, an antistatic agent, a pigment, a dye, a flame retardant, an anti-drip agent, or a combination comprising at least one of the foregoing additives. Strong acids based on sulfur or phosphorus compounds, such as phosphoric acid, phosphorous acid, p-toluene sulfonic acid, sulfonic or sulfuric acids should be avoided as they can cause undesired reaction of the epoxy additive as well as accelerating hydrolytic decomposition of the polyetherimide silicone copolymer.

The thermoplastic composition can be prepared by melt mixing or a combination of dry blending and melt mixing. Melt mixing can be performed in single or twin screw extruders or similar mixing devices that can apply a shear and heat to the components. Melt mixing can be performed at temperatures greater than or equal to the melting temperatures of the block copolymers and less than the degradation temperatures of the silicone polyetherimide copolymer blends.

All of the ingredients can be added initially to the processing system. In some embodiments, the ingredients can be added sequentially or through the use of one or more master batches. It can be advantageous to apply a vacuum to the melt through one or more vent ports in the extruder to remove volatile impurities in the composition.

As is demonstrated in the examples below, an article made from the composition can retain a percentage of its molecular weight when exposed to steam in an autoclave at a temperature for a time period. The percentage of molecular weight that is retained can be within a range having a lower limit and/or an upper limit. The range can include or exclude the lower limit and/or the upper limit. The percentage of molecular weight lower limit and/or upper limit can be selected from 60, 61, 62, 63, 64, 65, 66, 67, 68, 69, 70, 71, 72, 73, 74, 75, 76, 77, 78, 79, 79.1, 79.2, 79.3, 79.4, 79.5, 79.6, 79.7, 79.8, 79.9, 80, 80.1, 80.2, 80.3, 80.4, 80.5, 80.6, 80.7, 80.8, 80.9, 81, 81.1, 81.2, 81.3, 81.4, 81.5, 81.6, 81.7, 81.8, 81.9, 82, 82.1, 82.2, 82.3, 82.4, 82.5, 82.6, 82.7, 82.8, 82.9, 83, 83.1, 83.2, 83.3, 83.4, 83.5, 83.6, 83.7, 83.8, 83.9, 84, 84.1, 84.2, 84.3, 84.4, 84.5, 84.6, 84.7, 84.8, 84.9, 85, 85.1, 85.2, 85.3, 85.4, 85.5, 85.6, 85.7, 85.8, 85.9, 86, 86.1, 86.2, 86.3, 86.4, 86.5, 86.6, 86.7, 86.8, 86.9, 87, 87.1, 87.2, 87.3, 87.4, 87.5, 87.6, 87.7, 87.8, 87.9, 88, 88.1, 88.2, 88.3, 88.4, 88.5, 88.6, 88.7, 88.8, 88.9, 89, 89.1, 89.2, 89.3, 89.4, 89.5, 89.6, 89.7, 89.8, 89.9, 90, 90.1, 90.2, 90.3, 90.4, 90.5, 90.6, 90.7, 90.8, 90.9, 91, 91.1, 91.2, 91.3, 91.4, 91.5, 91.6, 91.7, 91.8, 91.9, 92, 92.1, 92.2, 92.3, 92.4, 92.5, 92.6, 92.7, 92.8, 92.9, 93, 93.1, 93.2, 93.3, 93.4, 93.5, 93.6, 93.7, 93.8, 93.9, 94, 94.1, 94.2, 94.3, 94.4, 94.5, 94.6, 94.7, 94.8, 94.9, 95, 95.1, 95.2, 95.3, 95.4, 95.5, 95.6, 95.7, 95.8, 95.9, 96, 96.1, 96.2, 96.3, 96.4, 96.5, 96.6, 96.7, 96.8, 96.9, 97, 97.1, 97.2, 97.3, 97.4, 97.5, 97.6, 97.7, 97.8, 97.9, 98, 98.1, 98.2, 98.3, 98.4, 98.5, 98.6, 98.7, 98.8, 98.9, 99, 99.1, 99.2, 99.3, 99.4, 99.5, 99.6, 99.7, 99.8, 99.9, 100, 101, 102, 103, 104, 105, 106, 107, 108, 109, 110, 111, 112, 113, 114, 115, 116, 117, 118, 119, or 120 percent. For example, the percentage of molecular weight that is retained can be at least 83% or from 83 to 100 percent.

An article made from the composition can retain a percentage of its molecular weight when exposed to steam in an autoclave at a temperature for a time period. The temperature can be within a range having a lower limit and/or an upper limit. The range can include or exclude the lower limit and/or the upper limit. The temperature lower limit and/or upper limit can be selected from 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, or 130 degrees Celsius. For example, the temperature can be at least 115 degrees Celsius, or from 110 to 120 degrees Celsius.

An article made from the composition can retain a percentage of its molecular weight when exposed to steam in an autoclave at a temperature for a time period. The time period can be within a range having a lower limit and/or an upper limit. The range can include or exclude the lower limit and/or the upper limit. The time period lower limit and/or upper limit can be selected from 1, 2, 3, 4, 5, 6, 7, 8, 9, 10, 11, 12, 13, or 14 days. For example, the time period can be 3 days or 7 days.

The article can be a coated wire comprising a conductive wire and an insulating layer disposed on and at least partially surrounding the wire. The conductive wire can be conductive metal such as copper, and the insulating layer includes the polysiloxane/polyimide block copolymer composition as described above. Additional layers can be present between the conductive wire and the insulating layer, or disposed on the insulating layer. Multiple conductive wires can be coated with the insulating layer. Multiple coated wires can be wound to form a cable.

Accordingly, in an embodiment, a polysiloxane/polyimide block copolymer with improved resistance to steam, and optionally having a weight average molecular weight of 15,000 to 80,000 Daltons, which is used in the present composition, comprises repeating groups of formula (I) and formula (II): 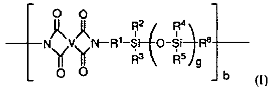 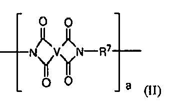 optionally wherein the siloxane content of the polysiloxane/polyimide block copolymer is 10 to 40 weight percent based on the total weight of the block copolymer, and wherein wherein b is from 10 to 1,000, g is from 1 to 50, a is from 10 to 500, R¹⁻⁶ are independently selected from substituted or unsubstituted, saturated, unsaturated, or aromatic monocyclic or polycyclic groups having 5 to 30 carbon atoms, substituted or unsubstituted alkyl groups having 1 to 30 carbon atoms, substituted or unsubstituted alkenyl groups having 2 to 30 carbon atoms, or combinations thereof, and R⁷ in formula (II) includes substituted or unsubstituted divalent organic radicals such as: aromatic hydrocarbon radicals having. 6 to 20 carbon atoms and halogenated derivatives thereof; straight or branched chain alkylene radicals having 2 to 20 carbon atoms; cycloalkylene radicals having 3 to 20 carbon atoms; or divalent radicals of the general formula (V) 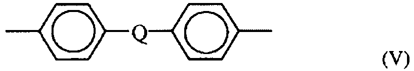 wherein Q includes a divalent moiety comprising -O-, -S-, -C(O)-, -SO₂-, -SO-, -C_{y}H_{2y}- (y being an integer from 1 to 36), and halogenated derivatives thereof, including perfluoroalkylene groups and V is a tetravalent linker selected from substituted or unsubstituted, saturated, unsaturated, or aromatic monocyclic or polycyclic groups having 5 to 50 carbon atoms, substituted or unsubstituted alkyl groups having 1 to 30 carbon atoms, or combinations thereof.

In any of the foregoing embodiments, the polysiloxane/polyimide block copolymer can comprise repeating units of formula (VI) and (VII): 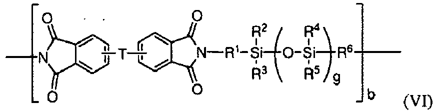 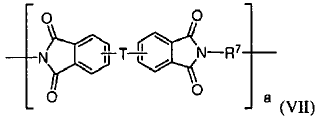 wherein T is -O-, or a group of the Formula -O-Z-O- wherein the divalent bonds of the -O- or the -O-Z-O- group are in the 3,3',3,4',4,3', or the 4,4' positions, and wherein Z is a C₆ to C₃₆ aryl group, b is an integer 10 to 1,000; g is an integer of 1 to 50; a is from 10 to 500, and; R¹⁻⁶ are independently selected from substituted or unsubstituted, aromatic monocyclic or polycyclic groups having 5 to 30 carbon atoms, substituted or unsubstituted alkyl groups having 1 to 30 carbon atoms, or substituted or unsubstituted alkenyl groups having 2 to 30 carbon atoms and wherein R⁷ is derived from m- phenylenediamine, p-phenylenediamine, a sulfonyl dianiline, an oxydianiline, a bis aminophenoxy phenyl sulfone, a methylene dianiline, a bis aminophenoxy benzene or a combination or two or more of the foregoing.

A composition comprising any of the foregoing embodiments of the polysiloxane/polyimide block copolymer further comprises from 0.1 to 10 wt% of a combination of a polyfunctional epoxide compound and a hydrotalcite compound, specifically calcined hydrotalcite, for example wherein the hydrotalcite or calcined hydrotalcite has a magnesium oxide to aluminum oxide mole ratio of 4.0 to 5.0 and combinations thereof wherein the polyepoxide compound has molecular weight from 200 to 18000 Daltons, and can be, for example, a cyclohexane oxide functional polyepoxide, or a glycidyl methacrylate copolymer from a least one monomer selected from C1 to C6 acrylates, C1 to C6 methacrylate, styrene, methyl styrene, butadiene, and the hydrotalcite compound has a particle size from 1 to 50 micrometers, specifically the calcined hydrotalcite has a particle size from 1 to 10 micrometers, and optionally wherein the calcined hydrotalcite has less than 30 ppm of elements selected from mercury, lead, cadmium, arsenic, bismuth or combinations thereof. In any of the foregoing embodiments, the polyepoxide compound and hydrotalcite compound are used in combination having from 1 to 99% polyepoxide compound and 99 to 1% hydrotalcite compound.

Further in any of the foregoing embodiments, the block copolymer can have a residual solvent content less than or equal to 500 parts by weight of solvent per million parts by weight of block copolymer, and/or the block copolymer has less than 100 parts by weight of halogen selected from bromine, chlorine or combinations thereof, per million parts by weight of block copolymer, and/or the amount of water extractable metal ions is less than or equal to 1000 parts by weight of metal ions per million parts by weight of polysiloxane/polyimide block copolymer.

An article comprising any of the foregoing embodiments of the polysiloxane/polyimide block copolymer composition is also described, wherein the polysiloxane/polyimide block copolymer can retain at least 83% of its weight average molecular weight when exposed to steam in an autoclave at temperature of from 110 to 120 degrees Celsius for at least 3 days, and/or when exposed to steam in an autoclave at temperature of from 115 degrees Celsius for at least 7 days. The article can be, for example, a wire coated with any of the foregoing embodiments of the polysiloxane/polyimide block copolymer composition.

### EXAMPLES

SILTEM STM1600 silicone polyetherimide from SABIC Innovative Plastics was blended with: 1% of a hydrotalcite (HT) from Ciba Co. (HYCITE 713), 0.5% of a bis cycloaliphatic epoxide (ERL), ERL-4221 = 3,4-epoxycyclohexylmethyl-3,4-epoxycyclohexanecarboxylate, Mw = 252 Daltons, epoxy equivalent weight about 135 g/mol. from Dow-Union Carbide Co., 0.5% of a styrene glycidyl methacrylate copolymer GMA-C, is JONCRYL ADR4368CS from BASF, Tg about 54°C, Mw about 6,800 Daltons, epoxy equivalent weight (g/mol) about 285. Joncryl is supplied by BASF, or 0.1% of fumed silica (Silica), CABOSIL TS-720 from Cabot Co.

STM1600 is from SABIC Innovative Polymers with about 25 wt% dimethyl silicone blocks, with a degree of polymerization of about 10 repeat units, copolymerized with meta phenyl diamine and bisphenol A dianhydride. It has less than 1000 ppm organic solvent with a metal ion content below 1000 ppm The hydrotalcite has a particle size of less than 5 micrometers, with no detectable mercury, lead, cadmium, arsenic, bismuth it further has a MgO to Al₂O₃ ratio of about 4.0 to 5.0 with a weight loss on drying of less than 0.3 wt%.

The ingredients of the examples shown in the Tables below were tumble blended and then extruded on a 30 mm Werner Pfleiderer twin screw extruder with a vacuum vented mixing screw, at a barrel and die head temperature between 300 and 350° C and 250 to 300 rpm screw speed. The extrudate was cooled through a water bath prior to pelletizing. The compositions of examples were dried for 4 hours at 150 °C and then injection molded into test parts at about 300 to 350 °C on a 180 ton molding machine.

Molded parts of the blends were exposed to steam in an autoclave at 115 °C for 3 and 7 days. Steam was generated from deionized water. Molecular weight (Mw) of the as molded and aged parts was determined by gel permeation chromatography (GPC) using polystyrene calibration standards. Molecular weight is reported as weight average molecular weight (Mw). The Mw and % retention of the initial Mw are shown in Table 1 below. The STM1600 control (example A) shows a faster loss of molecular weight (Mw) than do the samples of the invention; example 1 with the hydrotalcite and examples 2, 3 with the epoxy compounds ERL and GMA-C. While both polyepoxide compounds are effective, the ERL cyclohexane oxide shows superior Mw retention to the GMA-C copolymer.

Note that the fumed silica, control Example B, does not improve Mw retention as do the hydrotalcite or polyepoxides. Also note that under these conditions after 14 days a polyetherimide with no silicone content, such as ULTEM 1010 from SABIC Innovative Plastics, undergoes less than a 5% drop in Mw and does not show the same Mw drop, with concomitant loss of mechanical properties, as the silicone polyetherimide.

| Table 1: Silicone Polyetherimide Hydrolysis at 115°C steam | | | | | |
|---|---|---|---|---|---|
| Example | A (Control) | Ref. 1 | Ref. 2 | Ref. 3 | B (Control) |
| Mw | STM1600 | 1% HT | 0.5% ERL | 0.5% GMA-C | 0.1% Silica |
| 0 days 115°C | 51213 | 43798 | 48387 | 61931 | 51605 |
| 3 days 115°C | 42395 | 40213 | 46614 | 53876 | 42395 |
| 7 days 115°C | 36774 | 37477 | 39343 | 46450 | 37815 |

| % Mw retention after 115°C steam exposure | | | | | |
|---|---|---|---|---|---|
| 0 days 115°C | 100 | 100 | 100 | 100 | 100 |
| 3 days 115°C | 82.8 | 91.8 | 96.3 | 87.0 | 82.1 |
| 7 days 115°C | 72.0 | 86.0 | 81.0 | 75.0 | 73.0 |

Fig 1 shows the retention of initial Mw also indicating better performance of the hydrotalcite or polyepoxy silicone polyetherimide blends.

Higher Mw retention will ultimately be reflected in better mechanical properties of parts made from the polymer blend, such as strength, impact, and elongation and will give more stable resin performance after exposure to steam or hot water.

A second set of experiments was done using the STM 1600 silicone polyetherimide with hydrotalcite and ERL epoxy. Table 2 shows the improved retention of Mw compared to the control Example C. The control with no additive (Example C) as well as reference examples with 0.5% ERL epoxy and 1% hydrotalcite from Table 1 were repeated with new batch of ingredients. A higher level of ERL (1% in ref. example 5) showed better retention of Mw after 7 days steam exposure than 0.5% ERL (Ref. example 4). Note the unexpectedly strong synergy displayed in combinations of hydrotalcite (HT) and ERL epoxy in Examples 8 and 9, which show the best Mw retention of any samples tested.

| Table 2: Silicone Polyetherimide Hydrolysis at 115°C steam | | | | | | | |
|---|---|---|---|---|---|---|---|
| Example | C (Control) | Ref. 4 | Ref. 5 | Ref. 6 | Ref. 7 | 8 | 9 |
| Mw | STM 1600 | 0.5% ERL | 1.0% ERL | 1% HT | 2% HT | 1%ERL+1%HT | 2%ERL+2%HT |
| d 115°C | 48613 | 48781 | 48684 | 47710 | 46214 | 47744 | 46696 |

| 7 d 115°C | 36178 | 39920 | 45666 | 38009 | 37581 | 45931 | 47133 |
|---|---|---|---|---|---|---|---|
| 14 d 115°C | 34098 | 35059 | 38009 | 34539 | 33466 | 40040 | 41920 |

| % Mw retention after 115°C steam exposure | | | | | | | |
|---|---|---|---|---|---|---|---|
| 0 d 115°C | 100.0 | 100.0 | 100.0 | 100.0 | 100.0 | 100.0 | 100.0 |
| 7.d 115°C | 74.4 | 81.8 | 93.8 | 79.7 | 81.3 | 96.2 | 100.9 |
| 14 d 115°C | 70 1 | 71.9 | 78.1 | 72.4 | 72.4 | 83.9 | 89.8 |

## Claims

1. A polysiloxane/polyimide block copolymer composition with improved resistance to steam comprising:
a polysiloxane/polyimide block copolymer comprises repeating groups of formula (I) and formula (II): 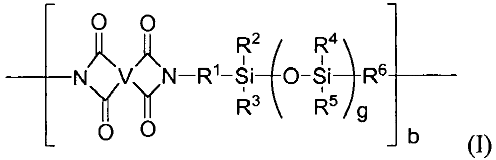 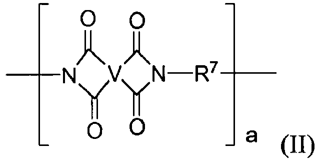 wherein b is from 10 to 1,000, g is from 1 to 50, a is from 10 to 500, R¹⁻⁶ are independently selected from substituted or unsubstituted, saturated, unsaturated, or aromatic monocyclic or polycyclic groups having 5 to 30 carbon atoms, substituted or unsubstituted alkyl groups having 1 to 30 carbon atoms, substituted or unsubstituted alkenyl groups having 2 to 30 carbon atoms, or combinations thereof, and V is a tetravalent linker selected from substituted or unsubstituted, saturated, unsaturated, or aromatic monocyclic or polycyclic groups having 5 to 50 carbon atoms, substituted or unsubstituted alkyl groups having 1 to 30 carbon atoms, or combinations thereof; R7 in formula (II) includes substituted or unsubstituted divalent organic radicals such as: aromatic hydrocarbon radicals having 6 to 20 carbon atoms and halogenated derivatives thereof; straight or branched chain alkylene radicals having 2 to 20 carbon atoms; cycloalkylene radicals having 3 to 20 carbon atoms; or divalent radicals of the general formula (V) 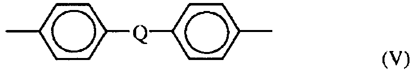 wherein Q includes a divalent moiety comprising -O -S-, -C(O)-, -SO₂-, -SO-, -C_{y}H_{2y}- (y being an integer from 1 to 36), and halogenated derivatives thereof, including perfluoroalkylene groups.
and
from 0.1 to 10 wt% of a combination of, a polyfunctional epoxide compound, and a hydrotalcite compound, wherein the polyepoxide compound has a weight average molecular weight (Mw) from 200 to 18000 Daltons (determined by gel permeation chromatography (GPC) using polystyrene calibration standards),
and the hydrotalcite compound has an average particle size from 1 to 10 micrometers, and wherein the polyepoxide compound and hydrotalcite compound are used in combination having from 1 to 99% polyepoxide compound and 99 to 1% hydrotalcite compound.

2. The polysiloxane/polyimide block copolymer composition of claim 1, wherein R²⁻⁵ are methyl groups and R¹ and R⁶ are alkylene groups having 3 to 10 carbons.

3. The polysiloxane/polyimide copolymer composition of any one of claims 1-2 comprising repeating units of formula (VI) and (VII): 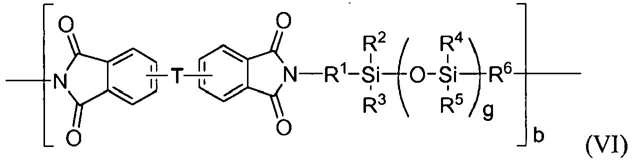 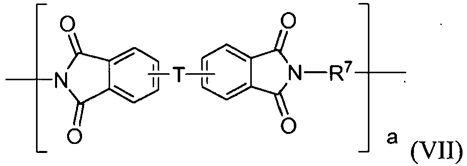 wherein T is -O-, or a group of the Formula -O-Z-O- wherein the divalent bonds of the -O- or the -O-Z-O- group are in the 3,3', 3,4', 4,3', or the 4,4' positions, and wherein Z is a C6 to C36 aryl group, b is an integer 10 to 1,000; g is an integer of 1 to 50; a is from 10 to 500, and; R¹⁻⁶ are independently selected from substituted or unsubstituted, aromatic monocyclic or polycyclic groups having 5 to 30 carbon atoms, substituted or unsubstituted alkyl groups having 1 to 30 carbon atoms, or substituted or unsubstituted alkenyl groups having 2 to 30 carbon atoms and
wherein R⁷ is derived from m- phenylenediamine, p-phenylenediamine, a sulfonyl dianiline, an oxydianiline, a bis aminophenoxy phenyl sulfone, a methylene dianiline, a bis aminophenoxy benzene or combinations thereof.

4. The polysiloxane/polyimide block copolymer composition of any one of claims 1-3 wherein the hydrotalcite compound is a calcined hydrotalcite.

5. The polysiloxane/polyimide block copolymer composition of any one of claims 1-4 wherein the hydrotalcite has a magnesium oxide to aluminum oxide mole ratio of about 4.0 to 5.0.

6. The polysiloxane/polyimide block copolymer composition of any one of claims 1-5 wherein the hydrotalcite has less than 30 ppm of elements selected from mercury, lead, cadmium, arsenic, bismuth or combinations thereof.

7. The polysiloxane/polyimide block copolymer composition of any one of claims 1-6 wherein the polyepoxide compound is a cyclohexane oxide functional polyepoxide.

8. The polysiloxane/polyimide block copolymer composition of any one of claims 1-7 wherein the polyepoxide compound is a glycidyl methacrylate copolymer derived from a least one monomer selected from C1 to C6 acrylates, C1 to C6 methacrylates, styrene, methyl styrene, or butadiene.

9. The polysiloxane/polyimide block copolymer composition of any one of claims 1-8 wherein the siloxane content is 10 to 40 weight percent based on the total weight of the block copolymer.

10. The polysiloxane/polyimide block copolymer composition of any one of claims 1-9 wherein the amount of water extractable metal ions is less than or equal to 1000 parts by weight of metal ions per million parts by weight of polysiloxane/polyimide block copolymer.

11. The polysiloxane/polyimide block copolymer composition of any one of claims 1-10 wherein the polysiloxane/polyimide block copolymer has a weight average molecular weight of 15,000 to 80,000 Daltons as determined by gel permeation chromatography using polystyrene calibration standards.

12. An article comprising the composition of any one of claims 1-12 wherein the polysiloxane/polyimide block copolymer retains at least 83% of its weight average molecular weight when exposed to steam in an autoclave at temperature of from 110 to 120 degrees Celsius for at least 3 days.

13. The article of any one of claims 1-12, wherein the polysiloxane/polyimide block copolymer retains at least 83% of its molecular weight (Mw) when exposed to steam in an autoclave at temperature of from 115 degrees Celsius for at least 7 days.

14. The article of any one of claims 13, wherein the article is a coated wire comprising a conductor wire and an insulating layer disposed on and at least partially surrounding the wire and comprising the polysiloxane/polyimide block copolymer composition of any one of claims 1-14.

## Patentansprüche

1. Polysiloxan/Polyimid-Blockcopolymerzusammensetzung mit verbesserter Dampfbeständigkeit, welche Folgendes umfasst:
ein Polysiloxan/Polyimid-Blockcopolymer, das Wiederholgruppen nach Formel (I) und Formel (II) umfasst: 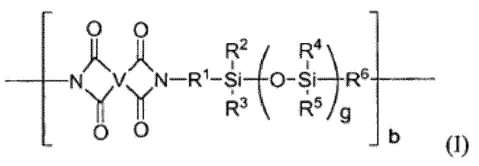 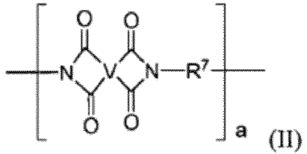 wobei b von 10 bis 1.000 beträgt, g von 1 bis 50 beträgt, a von 10 bis 500 beträgt, R¹⁻⁶ auf unabhängige Weise aus substituierten oder nicht substituierten, gesättigten, ungesättigten, oder aromatischen monozyklischen oder polyzyklischen Gruppen mit 5 bis 30 Kohlenstoffatomen, substituierten oder nicht substituierten Alkylgruppen mit 1 bis 30 Kohlenstoffatomen, substituierten oder nicht substituierten Alkenylgruppen mit 2 bis 30 Kohlenstoffatomen oder Kombinationen davon ausgewählt sind, und V ein vierbindiger Linker ist, welcher aus substituierten oder nicht substituierten, gesättigten, ungesättigten, oder aromatischen monozyklischen oder polyzyklischen Gruppen mit 5 bis 50 Kohlenstoffatomen, substituierten oder nicht substituierten Alkylgruppen mit 1 bis 30 Kohlenstoffatomen oder Kombinationen davon ausgewählt ist; R7 in Formel (II) substituierte oder nicht substituierte zweibindige organische Reste wie etwa die folgenden umfasst: aromatische Kohlenwasserstoffreste mit 6 bis 20 Kohlenstoffatomen und halogenierte Derivate davon; geradkettige oder verzweigte Alkylenreste mit 2 bis 20 Kohlenstoffatomen; Cycloalkylenreste mit 3 bis 20 Kohlenstoffatomen; oder zweibindige Reste nach der allgemeinen Formel (V) 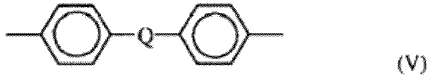 wobei Q einen zweibindigen Baustein umfasst, der -O-, -S-,-C(O)-,-SO₂-, -SO-, -C_{y}H_{2y}- umfasst (wobei y eine ganze Zahl von 1 bis 36 ist), sowie halogenierte Derivate davon, einschließlich Perfluoralkylengruppen,
und
0,1 bis 10 Gew.-% einer Kombination aus einer polyfunktionellen Epoxidverbindung und einer Hydrotalkitverbindung, wobei die Polyepoxidverbindung ein Gewichtsmittel des Molekulargewichts (Mw) von 200 bis 18.000 Dalton aufweist (bestimmt mittels Gelpermeationschromatographie (GPC) unter Verwendung von Polystyrol-Kalibierungsstandards),
und die Hydrotalkitverbindung eine durchschnittliche Partikelgröße von 1 bis 10 Mikrometern hat, und wobei die Polyepoxidverbindung und die Hydrotalkitverbindung in einer Kombination verwendet werden, welche 1 bis 99 % der Polyepoxidverbindung und 99 bis 1 % der Hydrotalkitverbindung aufweist.

2. Polysiloxan/Polyimid-Blockcopolymerzusammensetzung nach Anspruch 1, wobei R²⁻⁵ Methylgruppen sind und R¹ und R⁶ Alkylengruppen mit 3 bis 10 Kohlenstoffatomen sind.

3. Polysiloxan/Polyimid-Copolymerzusammensetzung nach einem beliebigen der Ansprüche 1 bis 2, welche Wiederholeinheiten nach den Formeln (VI) und (VII) umfasst: 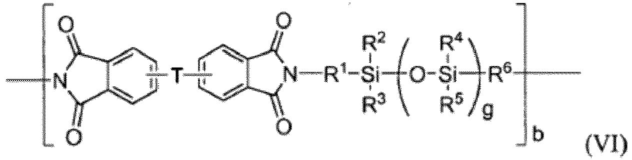 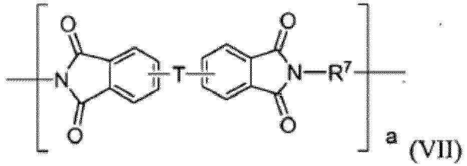
wobei T für -O- oder eine Gruppe der Formel -O-Z-O- steht, wobei die beiden Bindungsarme von -O- oder der -O-Z-O-Gruppe sich an den Positionen 3,3', 3,4', 4,3' oder 4,4' befinden und wobei Z eine C6- bis C36-Arylgruppe ist, b eine ganze Zahl 10 bis 1.000 ist; g eine ganze Zahl von 1 bis 50 ist; a von 10 bis 500 beträgt; und R¹⁻⁶ auf unabhängige Weise aus substituierten oder nicht substituierten aromatischen monozyklischen oder polyzyklischen Gruppen mit 5 bis 30 Kohlenstoffatomen, substituierten oder nicht substituierten Alkylgruppen mit 1 bis 30 Kohlenstoffatomen, oder substituierten oder nicht substituierten Alkenylgruppen mit 2 bis 30 Kohlenstoffatomen ausgewählt sind, und
wobei R⁷ sich von einem m-Phenylendiamin, p-Phenylendiamin, einem Sulfonyldianilin, einem Oxydianilin, einem bis-(Aminophenoxy)phenylsulfon, einem Methylendianilin, einem bis-(Aminophenoxy)benzol oder von Kombinationen davon ableitet.

4. Polysiloxan/Polyimid-Blockcopolymerzusammensetzung nach einem beliebigen der Ansprüche 1 bis 3, wobei es sich bei der Hydrotalkitverbindung um einen gebrannten Hydrotalkit handelt.

5. Polysiloxan/Polyimid-Blockcopolymerzusammensetzung nach einem beliebigen der Ansprüche 1 bis 4, wobei der Hydrotalkit ein Molverhältnis von Magnesiumoxid zu Aluminiumoxid aufweist, das ungefähr 4,0 bis 5,0 beträgt.

6. Polysiloxan/Polyimid-Blockcopolymerzusammensetzung nach einem beliebigen der Ansprüche 1 bis 5, wobei der Hydrotalkit weniger als 30 ppm an Elementen aufweist, die aus Quecksilber, Blei, Cadmium, Arsen, Bismut oder Kombinationen davon ausgewählt sind.

7. Polysiloxan/Polyimid-Blockcopolymerzusammensetzung nach einem beliebigen der Ansprüche 1 bis 6, wobei es sich bei der Polyepoxidverbindung um ein Polyepoxid mit funktioneller Cyclohexanoxidgruppe handelt.

8. Polysiloxan/Polyimid-Blockcopolymerzusammensetzung nach einem beliebigen der Ansprüche 1 bis 7, wobei es sich bei der Polyepoxidverbindung um ein Glycidylmethacrylatcopolymer handelt, welches sich von mindestens einem Monomer ableitet, welches aus C1- bis C6-Acrylaten, C1- bis C6-Methacrylaten, Styrol, Methylstyrol oder Butadien ausgewählt ist.

9. Polysiloxan/Polyimid-Blockcopolymerzusammensetzung nach einem beliebigen der Ansprüche 1 bis 8, wobei der Siloxangehalt 10 bis 40 Gewichtsprozent beträgt, bezogen auf das Gesamtgewicht des Blockcopolymers.

10. Polysiloxan/Polyimid-Blockcopolymerzusammensetzung nach einem beliebigen der Ansprüche 1 bis 9, wobei die Menge an wasserextrahierbaren Metallionen höchstens 1000 Gewichtsteile an Metallionen auf eine Million Gewichtsteile an Polysiloxan/Polyimid-Blockcopolymer beträgt.

11. Polysiloxan/Polyimid-Blockcopolymerzusammensetzung nach einem beliebigen der Ansprüche 1 bis 10, wobei das Polysiloxan/Polyimid-Blockcopolymer ein Gewichtsmittel der Molekulargewichts von 15.000 bis 80.000 Dalton aufweist, gemäß einer Bestimmung mittels Gelpermeationschromatographie unter Verwendung von Polystyrol-Kalibierungsstandards.

12. Gegenstand, der die Zusammensetzung nach einem beliebigen der Ansprüche 1 bis 11 umfasst, wobei das Polysiloxan/Polyimid-Blockcopolymer mindestens 83 % seines Gewichtsmittels des Molekulargewichts beibehält, wenn es mindestens 3 Tage lang in einem Autoklaven bei einer Temperatur von 110 bis 120 Grad Celsius Dampf ausgesetzt wird.

13. Gegenstand nach einem beliebigen der Ansprüche 1 bis 12, wobei das Polysiloxan/Polyimid-Blockcopolymer mindestens 83 % seines Gewichtsmittels des Molekulargewichts (Mw) beibehält, wenn es mindestens 7 Tage lang in einem Autoklaven bei einer Temperatur von 115 Grad Celsius Dampf ausgesetzt wird.

14. Gegenstand nach einem beliebigen der Ansprüche 13, wobei es sich bei dem Gegenstand um einen beschichteten Draht handelt, der einen Leiterdraht umfasst sowie eine Isolierschicht, welche auf dem Draht angeordnet ist und diesen zumindest teilweise umgibt, wobei sie die Polysiloxan/Polyimid-Blockcopolymerzusammensetzung nach einem beliebigen der Ansprüche 1 bis 11 umfasst.

## Revendications

1. Composition de copolymère séquencé de polysiloxane/polyimide possédant une résistance améliorée à la vapeur, comprenant :
un copolymère séquencé de polysiloxane/polyimide comprenant des groupes récurrents répondant à la formule (I) et à la formule (II) : 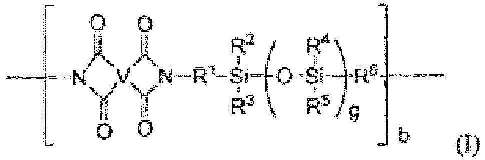 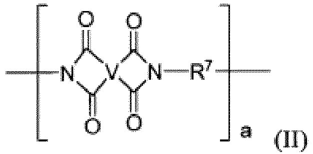 dans lesquelles b représente une valeur de 10 à 1.000, g représente une valeur de 1 à 50, a représente une valeur de 10 à 500, les radicaux R¹⁻⁶ sont choisis, de manière indépendante, parmi des groupes monocycliques ou polycycliques substitués ou non substitués, saturés, insaturés ou aromatiques contenant de 5 à 30 atomes de carbone, des groupes alkyle substitués ou non substitués contenant de 1 à 30 atomes de carbone, des groupes alcényle substitués ou non substitués contenant de 2 à 30 atomes de carbone, ou leurs combinaisons, et V représente un lieur tétravalent choisi parmi des groupes monocycliques ou polycycliques substitués ou non substitués, saturés, insaturés ou aromatiques contenant de 5 à 50 atomes de carbone, des groupes alkyle substitués ou non substitués contenant de 1 à 30 atomes de carbone, ou leurs combinaisons ; R⁷ dans la formule (II) englobe des radicaux organiques divalents substitués ou non substitués, tels que : des radicaux d'hydrocarbures aromatiques contenant de 6 à 20 atomes de carbone et leurs dérivés halogénés ; des radicaux alkylène à chaîne droite ou ramifiée contenant de 2 à 20 atomes de carbone ; des radicaux cycloalkylène contenant de 3 à 20 atomes de carbone ; ou des radicaux divalents répondant à la formule générale (V) : 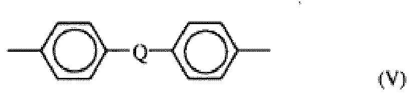 dans laquelle Q englobe une fraction divalente comprenant un atome d'oxygène, un atome de soufre, un groupe -C(O)-, un groupe -SO₂-, un groupe -SO-, un groupe -C_{y}H_{2y}- (y représentant un nombre entier de 1 à 36), et leurs dérivés halogénés, y compris des groupes perfluoroalkylène ; et
de 0,1 à 10 % en poids d'une combinaison d'un composé époxyde polyfonctionnel et d'un composé d'hydrotalcite, le composé de polyépoxyde possédant un poids moléculaire moyen en poids (Mw) de 200 à 18.000 Daltons (déterminé par chromatographie par perméation du gel (GPC) en utilisant des normes d'étalonnage à base de polystyrène) ;
et le composé d'hydrotalcite possède une granulométrie moyenne de 1 à 10 µm, et dans lequel le composé de polyépoxyde et le composé d'hydrotalcite sont utilisés en une combinaison dans laquelle le composé de polyépoxyde représente de 1 à 99 % et le composé d'hydrotalcite représente de 99 à 1 %.

2. Composition de copolymère séquencé de polysiloxane/polyimide selon la revendication 1, dans laquelle les radicaux R²⁻⁵ représentent des groupes méthyle et R¹ et R⁶ représentent des groupes alkylène contenant de 3 à 10 atomes de carbone.

3. Composition de copolymère de polysiloxane/polyimide selon l'une quelconque des revendications 1 à 2, comprenant des unités récurrentes répondant aux formules (VI) et (VII) : 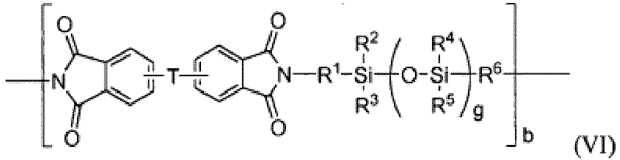 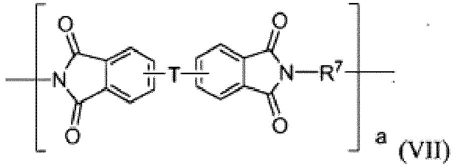 dans lesquelles T représente un atome d'oxygène ou un groupe répondant à la formule -O-Z-O-, dans lesquelles les liaisons divalentes de l'atome d'oxygène ou du groupe -O-Z-O- se trouvent aux positions 3,3', 3,4', 4,3' ou 4,4', et dans lesquelles Z représente un groupe aryle en C₆-C₃₆; b représente un nombre entier de 10 à 1.000 ; g représente un nombre entier de 1 à 50 ; a représente une valeur de 10 à 500; et les radicaux R¹⁻⁶ sont choisis, de manière indépendante, parmi des groupes monocycliques ou polycycliques aromatiques substitués ou non substitués contenant de 5 à 30 atomes de carbone, des groupes alkyle substitués ou non substitués contenant de 1 à 30 atomes de carbone ou des groupes alcényle substitués ou non substitués contenant de 2 à 30 atomes de carbone ; et
dans lesquelles R⁷ dérive de la m-phénylènediamine, de la p-phénylènediamine, d'une sulfonyldianiline, d'une oxydianiline, d'une bis aminophénoxy phényl sulfone, d'une méthylène dianiline, d'un bis aminophénoxy benzène, ou de leurs combinaisons.

4. Composition de copolymère séquencé de polysiloxane/polyimide selon l'une quelconque des revendications 1 à 3, dans laquelle le composé d'hydrotalcite est une hydrotalcite calcinée.

5. Composition de copolymère de séquencé polysiloxane/polyimide selon l'une quelconque des revendications 1 à 4, dans laquelle l'hydrotalcite possède un rapport molaire de l'oxyde de magnésium à l'oxyde d'aluminium d'environ 4,0 à 5,0.

6. Composition de copolymère séquencé de polysiloxane/polyimide selon l'une quelconque des revendications 1 à 5, dans laquelle l'hydrotalcite possède moins de 30 ppm d'éléments choisis parmi le mercure, le plomb, le cadmium, l'arsenic, le bismuth, ou leurs combinaisons.

7. Composition de copolymère séquencé de polysiloxane/polyimide selon l'une quelconque des revendications 1 à 6, dans laquelle le composé de polyépoxyde est un polyépoxyde possédant une fonctionnalité d'oxyde de cyclohexane.

8. Composition de copolymère séquencé de polysiloxane/polyimide selon l'une quelconque des revendications 1 à 7, dans laquelle le composé de polyépoxyde est un copolymère de méthacrylate de glycidyle qui dérive d'au moins un monomère choisi parmi des acrylates en C₁-C₆, des méthacrylates en C₁-C₆, du styrène, du méthylstyrène ou du butadiène.

9. Composition de copolymère séquencé de polysiloxane/polyimide selon l'une quelconque des revendications 1 à 8, dans laquelle la teneur en siloxane s'élève de 10 à 40 % en poids, basés sur le poids total du copolymère séquencé.

10. Composition de copolymère séquencé de polysiloxane/polyimide selon l'une quelconque des revendications 1 à 9, dans laquelle la teneur en ions métalliques qui peuvent être extraits dans l'eau est inférieure ou égale à 1.000 parties en poids d'ions métalliques par parties par million en poids du copolymère séquencé de polysiloxane/polyimide.

11. Composition de copolymère séquencé de polysiloxane/polyimide selon l'une quelconque des revendications 1 à 10, dans laquelle le copolymère séquencé de polysiloxane/polyimide possède un poids moléculaire moyen en poids de 15.000 à 80.000 Daltons, comme déterminé par chromatographie par perméation du gel en utilisant des normes d'étalonnage à base de polystyrène.

12. Article comprenant la composition selon l'une quelconque des revendications 1 à 11, dans lequel le copolymère séquencé de polysiloxane/polyimide conserve au moins 83 % de son poids moléculaire moyen en poids lorsqu'il est exposé à de la vapeur dans un autoclave à une température de 110 à 120 °C pendant au moins 3 jours.

13. Article selon l'une quelconque des revendications 1 à 12, dans lequel le copolymère séquencé de polysiloxane/polyimide conserve au moins 83 % de son poids moléculaire (Mw) lorsqu'il est exposé à de la vapeur dans un autoclave à une température de 115 °C pendant au moins 7 jours.

14. Article selon la revendication 13, dans lequel l'article représente un fil métallique enrobé comprenant un fil métallique conducteur et une couche d'isolation disposée sur le fil métallique et entourant au moins en partie ce dernier et comprenant la composition de copolymère séquencé de polysiloxane/polyimide selon l'une quelconque des revendications 1 à 11.
